# EUROPÄISCHE PATENTSCHRIFT

(11) **EP 3 205 121 B1**
(45) Veröffentlichungstag und Bekanntmachung des Hinweises auf die Patenterteilung: **01.07.2020**
(21) Anmeldenummer: 15781613.3
(22) Anmeldetag: 08.10.2015
(51) Int. Cl.: H04S 1/00, B60W 50/00, G05B 19/00, G06F 21/00, B60R 16/00

(54) **VORRICHTUNG UND VERFAHREN ZUM STEUERN EINER AUDIOAUSGABE FÜR EIN KRAFTFAHRZEUG**
APPARATUS AND METHOD FOR CONTROLLING AN AUDIO OUTPUT FOR A VEHICLE
DISPOSITIF ET PROCÉDÉE DE CONTRÔLE DE SON POUR UNE VOITURE

(30) Priorität: 09.10.2014 DE 102014220520
(43) Veröffentlichungstag der Anmeldung: 16.08.2017
(73) Patentinhaber: Continental Automotive GmbH, 30165 Hannover (DE)
(72) Erfinder: BRAUN, Holger, 35428 Langgöns (DE); KHALIQ, Abdul, 35398 Gießen (DE)
(86) Internationale Anmeldenummer: PCT/EP2015/073263
(87) Internationale Veröffentlichungsnummer: WO 2016/055569

(56) Entgegenhaltungen:
- DE-A1- 10 124 027
- FR-A1- 2 963 980
- US-A1- 2005 209 719

## Beschreibung

### Technisches Gebiet

Die vorliegende Erfindung betrifft Audio- und Soundwiedergabesysteme im Kraftfahrzeug. Insbesondere betrifft die vorliegende Erfindung eine Vorrichtung und ein Verfahren zum Steuern einer Audioausgabe für ein Kraftfahrzeug.

### Technischer Hintergrund

In Multicore- bzw. Mehrfachkernprozessor-Systemen existieren sowohl funktional sichere als auch nicht-funktional sicherheitsrelevante Audiosignale, beschrieben meist durch einen Teil der ISO-Norm ISO 26262 sowie einer Einteilung gemäß dem Automotive Safety Integrity Level, kurz ASIL, welches eine Risikoklassifizierung für die funktionelle Sicherheit von Straßenkraftfahrzeugen darstellt.

FR2963980 zeigt einen Soundgenerator für ein Elektroauto. Verschiedene Geräusche sind in Speichern abgelegt und können durch dedizierte Hardware (FPGAs) mit variablen Geschwindigkeiten abgespielt werden, um ein Fahrzeuggeräusch zu simulieren und Warngeräusche auszugeben.

### Zusammenfassung der Erfindung

Es ist eine Aufgabe der vorliegenden Erfindung eine verbesserte Vorrichtung und ein verbessertes Verfahren zum Steuern einer Audiowiedergabe für ein Kraftfahrzeug bereitzustellen.

Diese Aufgabe wird durch die Gegenstände der unabhängigen Patentansprüche gelöst. Ausführungsformen und Weiterbildungen sind den abhängigen Patentansprüchen, der Beschreibung und den Figuren zu entnehmen.

Ein erster Aspekt der vorliegenden Erfindung betrifft eine Vorrichtung zum Steuern einer Audioausgabe für ein Kraftfahrzeug, wobei die Vorrichtung umfasst: Eine Ausgangssummiereinrichtung zum Steuern eines Abspielens von generierten Audiosignalen basierend auf ersten Audiosignalen und zweiten Audiosignalen; eine erste Prozessoreinrichtung, welche mindestens einen Prozessorkern aufweist und welche dazu ausgelegt ist, die ersten Audiosignale für eine der ersten Prozessoreinrichtung zugeordneten erste Gruppe von Kraftfahrzeugkomponenten zu generieren; und eine zweite Prozessoreinrichtung, welche mindestens einen Prozessorkern aufweist und welche dazu ausgelegt ist, die zweiten Audiosignale für eine der zweiten Prozessoreinrichtung zugeordnete zweite Gruppe von Kraftfahrzeugkomponenten zu generieren, wobei ausschließlich die zweite Prozessoreneinrichtung dazu eingerichtet ist, die Ausgangsummiereinrichtung anzusteuern.

Der Begriff "Prozessoreinrichtung", wie von der vorliegenden Erfindung verwendet, umfasst dabei beispielsweis eine funktionelle Einheit oder Untereinheit eines Prozessors oder eines Ein-Chip-Systems. Mit dem Begriff "Prozessoreinrichtung" kann beispielsweise ein einzelner Rechenkern oder ein einzelner Audiomixer oder eine sonstige funktionale Einheit bezeichnet sein.

Die vorliegende Erfindung ermöglicht vorteilhaft eine Integration von sicheren und nicht-sicheren Funktionen auf auf einem Ein-Chip-System, kurz SoC, für englisch "System on Chip".

In dem Ein-Chip-System bzw. der Vorrichtung der vorliegenden Erfindung können die für die Funktionen notwendigen Elemente - beispielsweise erste Prozessoreinrichtung, zweite Prozessoreinrichtung und Ausgangssummiereinrichtung - derart in der verwendeten Prozessorarchitektur angeordnet und funktionell gekoppelt werden, dass die nach ISO 26262 geforderte Rückwirkungsfreiheit erreicht werden kann.

Nach einem weiteren, zweiten Aspekt der vorliegenden Erfindung wird ein Audiosystem für ein Kraftfahrzeug bereitgestellt, wobei das Audiosystem eine Vorrichtung nach dem ersten Aspekt oder nach einer beliebigen Ausführungsform des ersten Aspektes umfasst.

Nach einem weiteren, dritten Aspekt der vorliegenden Erfindung wird ein Verfahren zum Steuern einer Audioausgabe für ein Kraftfahrzeug bereitgestellt, wobei das Verfahren folgende Verfahrensschritte umfasst: Generieren von ersten Audiosignalen für eine der ersten Prozessoreinrichtung zugeordnete erste Gruppe von Kraftfahrzeugkomponenten; Generieren von zweiten Audiosignalen für eine der zweiten Prozessoreinrichtung zugeordnete zweite Gruppe von Kraftfahrzeugkomponenten; und Steuern eines Abspielens der generierten Audioausgangssignale basierend auf den ersten und zweiten Audiosignalen, wobei das Steuern ausschließlich durch die zweite Prozessoreneinrichtung erfolgt. Audiosignalen.

Die vorliegende Erfindung ermöglicht vorteilhaft, dass in einem Multicore- oder Mehrfachkernprozessorsystem ein Audiomixer oder Ausgangssummierer integriert wird. Mindestens ein Kern oder Core in dem Multicore- oder Mehrfachkernprozessorsystem wird auf die funktionale Sicherheit ausgelegt. Dieser funktional sichere Core ist auch für die Generierung der sicherheitsrelevanten Audiosignale zuständig.

Entertainment-Audiosignale können von einem anderen Core zur Verfügung gestellt werden. Nur der funktional sichere Core darf den integrierten Audiomixer steuern und stellt so sicher, dass die sicherheitsrelevanten Audiosignale zuverlässig ausgegeben werden.

Die vorliegende Erfindung stellt vorteilhaft eine Integration eines funktional sicher angesteuerten Audiomixers in einem Multicoresystem bereit und ermöglicht die Einsparung von externen Komponenten in einem Multimedia- oder Audiosystem mit Anforderung an die funktionale Sicherheit. Hierdurch können vorteilhaft die Audiopfade von Non-ASIL-zertifizierten Audioquellen von anderen Audiopfaden von ASIL-zertifizierten Audioquellen bis zum Erreichen des gemeinsam genutzten Audioausgabegerätes separiert werden.

Durch diese Maßnahme ist die in DIN 26262 geforderte Rückwirkungsfreiheit, Freedom from Interference, für gemischte ASIL-Systeme erfüllt.

Vorteilhafte Ausgestaltungen der Erfindung sind in den Unteransprüchen gekennzeichnet.

In einer vorteilhaften Ausführungsform der vorliegenden Erfindung ist vorgesehen, dass die erste Prozessoreinrichtung dazu ausgelegt ist, als die ersten Audiosignale nicht-sicherheitsrelevante Audiosignale zu generieren.

Dies ermöglicht vorteilhaft, eine den Sicherheitsanforderungen genügende Zuverlässigkeit des Audiosystems zu gewährleisten.

In einer weiteren vorteilhaften Ausführungsform der vorliegenden Erfindung ist vorgesehen, dass die zweite Prozessoreinrichtung dazu ausgelegt ist, als die zweiten Audiosignale sicherheitsrelevante Audiosignale zu generieren. Dies ermöglicht vorteilhaft, die Ausgabe von sicherheitsrelevanten Audiosignalen zu gewährleisten. Dies ermöglicht ferner vorteilhaft, die in DIN 26262 geforderte Rückwirkungsfreiheit (Freedom of Interference) zu gewährleisten.

In einer weiteren vorteilhaften Ausführungsform der vorliegenden Erfindung ist vorgesehen, dass die Vorrichtung dazu ausgebildet ist, Fahrzeugkomponenten in Abhängigkeit von ASIL-Risikostufen in nicht-sicherheitsrelevante erste Audiosignale generierende Fahrzeugkomponenten der erste Gruppe und sicherheitsrelevante zweite Audiosignale generierende Fahrzeugkomponenten der zweiten Gruppe zuzuordnen.

In einer weiteren vorteilhaften Ausführungsform der vorliegenden Erfindung ist vorgesehen, dass die zweite Prozessoreinrichtung dazu ausgelegt ist, ein Abspielen der Audiosignale basierend auf den ersten Audiosignalen für die erste Gruppe der Fahrzeugkomponenten zu beschränken.

Die beschriebenen Ausgestaltungen und Weiterbildungen lassen sich beliebig miteinander kombinieren.

Weitere mögliche Ausgestaltungen, Weiterbildungen und Implementierungen der vorliegenden Erfindung umfassen auch nicht explizit genannte Kombinationen von zuvor oder im Folgenden bezüglich der Ausführungsbeispiele beschriebenen Merkmale der Erfindung.

### Kurze Beschreibung der Figuren

Die beiliegenden Zeichnungen sollen ein weiteres Verständnis der Ausführungsformen der vorliegenden Erfindung vermitteln. Die beiliegenden Zeichnungen veranschaulichen Ausführungsformen und dienen im Zusammenhang mit der Beschreibung der Erklärung von Konzepten der vorliegenden Erfindung.

Andere Ausführungsformen und viele der genannten Vorteile ergeben sich im Hinblick auf die Zeichnungen. Die dargestellten Elemente der Zeichnungen sind nicht notwendigerweise maßstabsgetreu zueinander gezeigt.

Es zeigen:
- Figur 1: eine schematische Darstellung einer Vorrichtung zum Steuern einer Audioausgabe für ein Kraftfahrzeug gemäß einer Ausführungsform der vorliegenden Erfindung;
- Figur 2: eine schematische Darstellung eines Flussdiagramms eines Verfahrens zum Steuern einer Audioausgabe für ein Kraftfahrzeug gemäß einer weiteren Ausführungsform der vorliegenden Erfindung; und
- Figur 3: eine schematische Darstellung eines Kraftfahrzeugs zur Erläuterung der Erfindung.

### Detaillierte Beschreibung von Ausführungsbeispielen

In den Figuren der Zeichnungen bezeichnen gleiche Bezugszeichen gleiche oder funktionsgleiche Elemente, Bauteile, Komponenten oder Verfahrensschritte, soweit nichts Gegenteiliges angegeben ist.

Obwohl die vorliegende Erfindung anhand bevorzugter Ausführungsbeispiele vorstehend beschrieben wurde, ist sie nicht darauf beschränkt, sondern auf vielfältige Art und Weise modifizierbar. Insbesondere lässt sich die vorliegende Erfindung in mannigfaltiger Weise verändern oder modifizieren, ohne vom Kern der vorliegenden Erfindung abzuweichen.

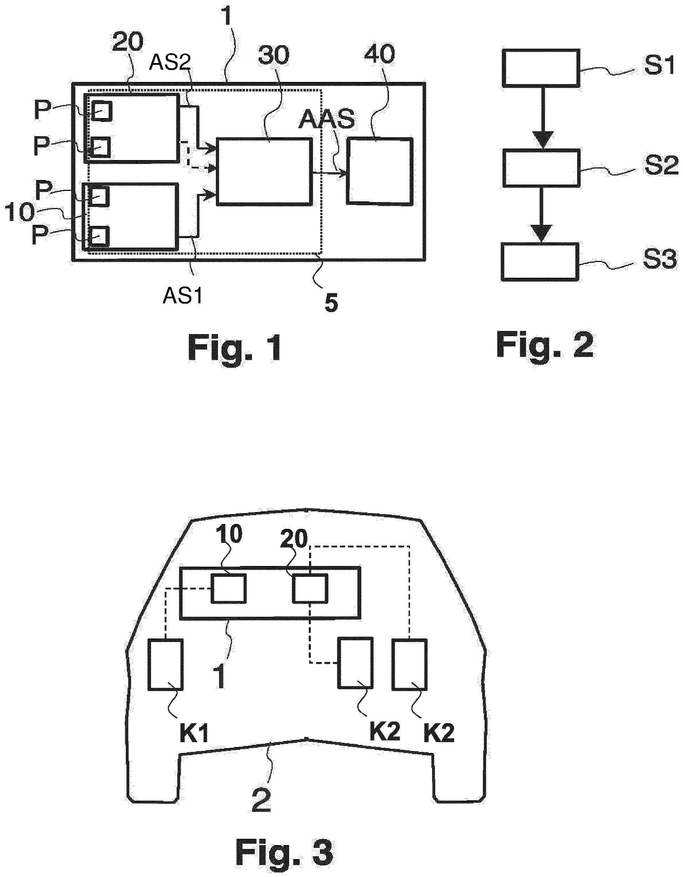

Die Figur 1 zeigt eine schematische Darstellung einer Vorrichtung zum Steuern einer Audioausgabe für ein Kraftfahrzeug gemäß einer Ausführungsform der vorliegenden Erfindung.

Eine Vorrichtung 1 zum Steuern einer Audioausgabe für ein Kraftfahrzeug 2 umfasst beispielsweise eine Ausgangssummiereinrichtung 30, eine erste Prozessoreinrichtung 10, eine zweite Prozessoreinrichtung 20 und eine Schwallwandlereinrichtung 40.

Die Vorrichtung 1 kann in ein Audiosystem 5 für das Kraftfahrzeug 2 eingegliedert sein.

Das Audiosystem 5 stellt eine Prozessoreinheit, auch SoC, abgekürzt für "System on Chip", dar. Das heißt, die erste Prozessoreinrichtung 10, die zweite Prozessoreinrichtung 20 und die Ausgangssummiereinrichtung 30 sind beispielsweise auf einem Prozessor integriert.

Die Ausgangssummiereinrichtung 30 ist beispielsweise als ein Audiomixer oder ein Audiomischer zum Steuern eines Abspielens von generierten Audioausgangssignalen AAS basierend auf ersten Audiosignalen AS1 und zweiten Audiosignalen AS2.

Die Ausgangssummiereinrichtung 30 verfügt beispielsweise über keinen eigenständigen Rechenkern.

Die erste Prozessoreinrichtung 10 weist beispielsweise mindestens einen Prozessorkern P auf und ist beispielsweise dazu ausgelegt, die erste Audiosignale AS1 für eine der ersten Prozessoreinrichtung 10 zugeordnete erste Gruppe von Fahrzeugkomponenten K1 zu generieren.

Die zweite Prozessoreinrichtung 20 weist beispielsweise mindestens einen Prozessorkern P auf und ist beispielsweise dazu ausgelegt, zweite Audiosignale AS2 für eine der zweiten Prozessoreinrichtung 20 zugeordnete zweite Gruppe von Kraftfahrzeugkomponenten K2 zu generieren und die Ausgangssummiereinrichtung 30 anzusteuern.

Beispielsweise ist die erste Prozessoreinrichtung 10 dazu ausgelegt, als die ersten Audiosignale AS1 nicht-sicherheitsrelevante Audiosignale zu generieren.

Als die abzuspielenden nicht-sicherheitsrelevanten ersten Audiosignale AS1 können beispielsweise Radio, Musik-Wiedergabe oder Entertainment Audiosignale verwendet werden.

Ferner können als die abzuspielenden nicht-sicherheitsrelevante ersten Audiosignale AS1 Richtungsangaben von einem Fahrzeugnavigationssystem oder Wetterhinweise von Witterungsüberwachungs- oder Wettervorhersagesystemen verwendet werden.

Als die abzuspielenden sicherheitsrelevante zweiten Audiosignale AS2 können beispielsweise Hinweise über Fehlfunktionen von sonstigen Fahrzeugkomponenten oder Warnhinweise von elektronischen Fahrerassistenzsysteme, Verkehrsmeldungen und Verkehrsdurchsagen von einem Autoradio oder einem Hörfunkempfänger, der für den Einbau in ein Kraftfahrzeug entwickelt wurde.

Beispielsweise ist die erste Prozessoreinrichtung 10 dazu ausgelegt, als die ersten Audiosignale AS1 nicht-sicherheitsrelevante Audiosignale zu generieren.

Die erste Prozessoreinrichtung 10 und die zweite Prozessoreinrichtung 20 sind beispielsweise als Mehrkernprozessor, auch Multicore-Prozessor oder Multikernprozessor ausgebildet und sind beispielsweise in der Form eines Mikroprozessors mit mehr als einem vollständigen Hauptkernprozessor bzw. Prozessorkern P in einem Chip oder in einem Chipverbund bzw. -satz ausgebildet.

Zusätzlich ist die Ausgangssummiereinrichtung 30 beispielsweise auf demselben Chip integriert.

Beispielsweise sind in der ersten Prozessoreinrichtung 10 und in der zweiten Prozessoreinrichtung 20 Mikroprozessorressourcen in Form von Prozessorkernen P mehrfach vorhanden.

Beispielsweise haben die einzelnen Prozessorkerne P eigene Registersätze und arithmetisch-logische Einheiten, ALU.

Beispielsweise sind die Prozessorkerne P als 8-bit, 16-bit, 32-bit oder 64-Bit-RISC-Prozessor aus gebildet. Als RISC-Prozessor kann eine Reduced Instruction Set Computing oder RISC-CPU verstanden werden, welche einen vereinfachten Befehlssatz aufweist.

Die erste Prozessoreinrichtung 10 und die zweite Prozessoreinrichtung 20 können dazu ausgebildet sein, einzelne Softwaremodule parallelisiert abzuarbeiten.

Das heißt, einzelne Computerprogramme können auf der ersten Prozessoreinrichtung 10 bzw. auf der zweiten Prozessoreinrichtung 20 nebenläufig ausgeführt werden, wobei eine nebenläufige Synchronisation der einzelnen Programmabschnitte vorgenommen wird.

Die Schwallwandlereinrichtung 40 kann beispielsweise als ein Lautsprecher oder eine Vielzahl von Lautsprechern aufweisen und als ein Wandler verwendet werden, der elektrische Signale, beispielsweise die Audioausgangssignale AAS, in mechanische Schwingungen oder Schall überträgt.

Die Schwallwandlereinrichtung 40 kann zur Tonerzeugung in dem für Menschen hörbaren Frequenzspektrum (ca. 20 Hz bis 20.000 Hz) verwendet werden. Je nach Anforderung bezüglich Lautstärke und Tonumfang variieren Bauart sowie Größe der Schwallwandlereinrichtung 40.

Die Figur 2 zeigt eine schematische Darstellung eines Flussdiagramms eines Verfahrens zum Steuern einer Audioausgabe für ein Kraftfahrzeug.

Das Verfahren umfasst dabei folgende Schritte:
Als ein erster Schritt des Verfahrens erfolgt ein Generieren S1 von ersten Audiosignalen AS1 für eine der ersten Prozessoreinrichtung 10 zugeordnete erste Gruppe von Kraftfahrzeugskomponenten K1.

Als ein zweiter Schritt des Verfahrens erfolgt ein Generieren S2 von zweiten Audiosignalen AS2 für eine der zweiten Prozessoreinrichtung 20 zugeordnete zweite Gruppe von Kraftfahrzeugskomponenten K2.

Als ein dritter Schritt des Verfahrens erfolgt ein Steuern S3 eines Abspielens der generierten Audioausgangssignale AAS basierend auf den ersten Ausgangssignalen AS1 und den zweiten Audiosignalen AS2.

Die Figur 3 zeigt eine schematische Darstellung eines Kraftfahrzeugs zur Erläuterung der Erfindung.

Das Kraftfahrzeug 2 umfasst beispielsweise ein Audiosystem 5 für das Kraftfahrzeug 2, wobei das Audiosystem 5 eine Vorrichtung 1 zum Steuern einer Audioausgabe für ein Kraftfahrzeug umfasst.

Das Kraftfahrzeug 2 umfasst ferner beispielsweise eine erste Gruppe von Kraftfahrzeugkomponenten K1, welche einer ersten Prozessoreinrichtung 10 zugeordnet werden.

Die erste Gruppe von Kraftfahrzeugkomponenten K1 kann beispielsweise externe Medienwiedergabegeräte, wie etwa CD-Wechsler, Smartphones, Tablets oder sonstige Multimediageräte umfassen.

Das Kraftfahrzeug 2 umfasst ferner beispielsweise eine zweite Gruppe von Kraftfahrzeugkomponenten K2, welche einer zweiten Prozessoreinrichtung 20 zugeordnet werden.

Die zweite Gruppe von Kraftfahrzeugkomponenten K2 kann beispielsweise Fahrerassistenzsysteme, wie ein Steuergerät für eine Einparkhilfe, ein Steuergerät für einen Spurwechselassistent, oder ein Steuergerät für einen "Toter-Winkel-Assistent" umfassen.

Obwohl die vorliegende Erfindung anhand bevorzugter Ausführungsbeispiele vorstehend beschrieben wurde, ist sie nicht darauf beschränkt, sondern auf vielfältige Art und Weise modifizierbar. Insbesondere lässt sich die Erfindung in mannigfaltiger Weise verändern oder modifizieren ohne vom Kern der Erfindung abzuweichen.

Ergänzend sei darauf hingewiesen, dass "umfassend" und "aufweisend" keine anderen Elemente oder Schritte ausschließt und "eine" oder "ein" keine Vielzahl ausschließt.

Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Patentansprüchen sind nicht als Einschränkungen anzusehen.

## Patentansprüche

1. Ein-Chip-System (1) zum Steuern einer Audioausgabe für ein Kraftfahrzeug (2) mit:
- einer Ausgangssummiereinrichtung (30) zum Steuern eines Abspielens von aus ersten Audiosignalen (AS1) und zweiten Audiosignalen (AS2) generierten Audioausgangssignalen (AAS);
- einer ersten Prozessoreinrichtung (10), welche mindestens einen Prozessorkern (P) aufweist und welche dazu ausgelegt ist, die ersten Audiosignale (AS1) für eine der ersten Prozessoreinrichtung (10) zugeordnete erste Gruppe von Kraftfahrzeugkomponenten (K1) zu generieren;
- einer zweiten Prozessoreinrichtung (20), welche mindestens einen Prozessorkern (P) aufweist und welche dazu ausgelegt ist, die zweiten Audiosignale (AS2) für eine der zweiten Prozessoreinrichtung (20) zugeordnete zweite Gruppe von Kraftfahrzeugkomponenten (K2) zu generieren,
**dadurch gekennzeichnet, dass** ausschließlich die zweite Prozessoreinrichtung (20) dazu eingerichtet ist, die Ausgangssummiereinrichtung (30) anzusteuern.

2. Ein-Chip-System nach Anspruch 1, wobei die erste Prozessoreinrichtung (10) dazu ausgelegt ist, als erste Audiosignale (AS1) nicht-sicherheitsrelevante Audiosignale zu generieren.

3. Ein-Chip-System nach Anspruch 1 oder 2, wobei die zweite Prozessoreinrichtung (20 dazu ausgelegt ist, als zweite Audiosignale (AS2) sicherheitsrelevante Audiosignale zu generieren.

4. Ein-Chip-System nach einem der vorhergehenden Ansprüche 1 bis 3, wobei die Vorrichtung dazu ausgebildet ist, Fahrzeugkomponenten in Abhängigkeit von ASIL-Risikostufen in nicht-sicherheitsrelevante erste Audiosignale (AS1) generierende Fahrzeugkomponenten (K1) der ersten Gruppe und sicherheitsrelevante zweite Audiosignale (AS2) generierende Fahrzeugkomponenten (K2) der zweiten Gruppe zuzuordnen.

5. Ein-Chip-System nach einem der vorhergehenden Ansprüche 1 bis 4, wobei die zweite Prozessoreinrichtung (20) dazu ausgelegt ist, ein Abspielen der Audioausgangssignale (AAS) basierend auf den ersten Audiosignalen (AS1) für die erste Gruppe der Kraftfahrzeugkomponenten (K1) zu beschränken.

6. Audiosystem (5) für ein Kraftfahrzeug (2), wobei das Audiosystem ein Ein-Chip-System (1) nach einem der vorhergehenden Ansprüche 1 bis 5 umfasst.

7. Verfahren zum Steuern eines Ein-Chip-Systems für die Audioausgabe in einem Kraftfahrzeug, wobei das Verfahren folgende Schritte umfasst:
- Generieren (S1) von ersten, einer ersten Gruppe von Kraftfahrzeugkomponenten zugeordneten Audiosignalen (AS1) in einer ersten Prozessoreinrichtung (10) ;
- Generieren (S2) von zweiten, einer zweiten Gruppe von Kraftfahrzeugkomponenten zugeordneten Audiosignalen (AS2) in einer zweiten Prozessoreinrichtung (20); und
- Steuern (S3) einer Ausgangssummiereinrichtung (30) für das Abspielen von aus ersten Audiosignalen (AS1) und zweiten Audiosignalen (AS2) generierten Audioausgangssignalen (AAS), wobei das Steuern ausschließlich durch die zweite Prozessoreinrichtung (20) erfolgt.

8. Verfahren nach Anspruch 7, wobei die ersten Audiosignale (AS1) nicht-sicherheitsrelevante Audiosignale sind.

9. Verfahren nach Anspruch 7 oder 8, wobei die zweiten Audiosignale (AS2) sicherheitsrelevante Audiosignale sind.

10. Verfahren nach einem der vorhergehenden Ansprüche 7 bis 9, wobei die Fahrzeugkomponenten in Abhängigkeit von ASIL-Risikostufen in nicht-sicherheitsrelevante erste Audiosignale (AS1) generierende Fahrzeugkomponenten und sicherheitsrelevante zweite Audiosignale (AS2) generierende Fahrzeugkomponenten eingeteilt werden.

## Claims

1. System-on-chip (1) for controlling an audio output for a motor vehicle (2), having:
- an output summation device (30) for controlling playback of audio output signals (AAS) generated from first audio signals (AS1) and second audio signals (AS2) ;
- a first processor device (10) which has at least one processor core (P) and is designed to generate the first audio signals (AS1) for a first group of motor vehicle components (K1) assigned to the first processor device (10);
- a second processor device (20) which has at least one processor core (P) and is designed to generate the second audio signals (AS2) for a second group of motor vehicle components (K2) assigned to the second processor device (20),
**characterized in that** only the second processor device (20) is configured to control the output summation device (30) .

2. System-on-chip according to Claim 1, wherein the first processor device (10) is designed to generate non-safety-relevant audio signals as first audio signals (AS1).

3. System-on-chip according to Claim 1 or 2, wherein the second processor device (20) is designed to generate safety-relevant audio signals as second audio signals (AS2) .

4. System-on-chip according to one of the preceding Claims 1 to 3, wherein the apparatus is designed to assign vehicle components to vehicle components (K1) in the first group which generate non-safety-relevant first audio signals (AS1) and to vehicle components (K2) in the second group which generate safety-relevant second audio signals (AS2) on the basis of ASIL risk levels.

5. System-on-chip according to one of the preceding Claims 1 to 4, wherein the second processor device (20) is designed to restrict playback of the audio output signals (AAS) on the basis of the first audio signals (AS1) for the first group of motor vehicle components (K1).

6. Audio system (5) for a motor vehicle (2), wherein the audio system comprises a system-on-chip (1) according to one of the preceding Claims 1 to 5.

7. Method for controlling a system-on-chip for the audio output in a motor vehicle, wherein the method comprises the following steps of:
- generating (S1) first audio signals (AS1) assigned to a first group of motor vehicle components in a first processor device (10);
- generating (S2) second audio signals (AS2) assigned to a second group of motor vehicle components in a second processor device (20); and
- controlling (S3) an output summation device (30) for the playback of audio output signals (AAS) generated from first audio signals (AS1) and second audio signals (AS2), wherein the control is carried out solely by the second processor device (20).

8. Method according to Claim 7, wherein the first audio signals (AS1) are non-safety-relevant audio signals.

9. Method according to Claim 7 or 8, wherein the second audio signals (AS2) are safety-relevant audio signals.

10. Method according to one of the preceding Claims 7 to 9, wherein the vehicle components are classified as vehicle components generating non-safety-relevant first audio signals (AS1) and vehicle components generating safety-relevant second audio signals (AS2) on the basis of ASIL risk levels.

## Revendications

1. Système monopuce (1) destiné à commander une reproduction audio pour un véhicule automobile (2), comprenant :
- un dispositif d'addition de sortie (30) destiné à commander une lecture de signaux de sortie audio (AAS) générés à partir de premiers signaux audio (AS1) et de deuxièmes signaux audio (AS2) ;
- un premier dispositif à processeur (10), lequel possède au moins un cœur de processeur (P) et lequel est conçu pour générer les premiers signaux audio (AS1) pour un premier groupe de composants de véhicule automobile (K1) associés au premier dispositif à processeur (10) ;
- un deuxième dispositif à processeur (20), lequel possède au moins un cœur de processeur (P) et lequel est conçu pour générer les deuxièmes signaux audio (AS2) pour un deuxième groupe de composants de véhicule automobile (K2) associés au deuxième dispositif à processeur (20),
**caractérisé en ce que** seul le deuxième dispositif à processeur (20) est conçu pour commander le dispositif d'addition de sortie (30).

2. Système monopuce selon la revendication 1, le premier dispositif à processeur (10) étant conçu pour générer en tant que premiers signaux audio (AS1) des signaux audio non pertinents pour la sécurité.

3. Système monopuce selon la revendication 1 ou 2, le deuxième dispositif à processeur (20) étant conçu pour générer en tant que deuxièmes signaux audio (AS2) des signaux audio pertinents pour la sécurité.

4. Système monopuce selon l'une des revendications précédentes 1 à 3, l'arrangement étant configuré pour classer les composants de véhicule en fonction des niveaux de risque ASIL en composants de véhicule (K1) du premier groupe, générant des premiers signaux audio (AS1) non pertinents pour la sécurité, et en composants de véhicule (K2) du deuxième groupe, générant des deuxièmes signaux audio (AS2) pertinents pour la sécurité.

5. Système monopuce selon l'une des revendications précédentes 1 à 4, le deuxième dispositif à processeur (20) étant conçu pour limiter une lecture des signaux de sortie audio (AAS) basés sur les premiers signaux audio (AS1) pour le premier groupe de composants de véhicule (K1).

6. Système audio (5) pour un véhicule automobile (2), le système audio comprenant un système monopuce (1) selon l'une des revendications précédentes 1 à 5.

7. Procédé pour commander un système monopuce pour la reproduction audio dans un véhicule automobile, le procédé comprenant les étapes suivantes :
- génération (S1) de premiers signaux audio (AS1), associés à un premier groupe de composants de véhicule, dans un premier dispositif à processeur (10) ;
- génération (S2) de deuxièmes signaux audio (AS2), associés à un deuxième groupe de composants de véhicule, dans un deuxième dispositif à processeur (20) ; et
- commande (S3) d'un dispositif d'addition de sortie (30) pour la lecture de signaux de sortie audio (AAS) générés à partir des premiers signaux audio (AS1) et des deuxièmes signaux audio (AS2), la commande s'effectuant exclusivement par le biais du deuxième dispositif à processeur (20).

8. Procédé selon la revendication 7, les premiers signaux audio (AS1) étant des signaux audio non pertinents pour la sécurité.

9. Procédé selon la revendication 7 ou 8, les deuxièmes signaux audio (AS2) étant des signaux audio pertinents pour la sécurité.

10. Procédé selon l'une des revendications précédentes 7 à 9, les composants de véhicule étant partagés en fonction des niveaux de risque ASIL en des composants de véhicule générant des premiers signaux audio (AS1) non pertinents pour la sécurité et en des composants de véhicule générant des deuxièmes signaux audio (AS2) pertinents pour la sécurité.
